# EUROPÄISCHE PATENTANMELDUNG

(11) **EP 2 667 046 A2**
(43) Veröffentlichungstag der Anmeldung: **27.11.2013**
(21) Anmeldenummer: 13160746.7
(22) Anmeldetag: 25.03.2013
(51) Int. Cl.: F16C 27/04, F01D 25/16

(54) **Wälzlager**

(30) Priorität: 24.05.2012 DE 102012208744
(71) Anmelder: Schaeffler Technologies AG & Co. KG, 91074 Herzogenaurach (DE)
(72) Erfinder: Bedenk, Johannes, 97531 Theres (DE)

(57) **Zusammenfassung**

Ein Wälzlager, insbesondere einer Gasturbine, umfasst
- eine Anzahl zwischen einem Innenring (2) und einem Außenring (3) angeordneter Wälzkörper (4),
- ein Gehäusebauteil (8), an welchem der Außenring (3) federnd befestigt ist, wobei der Außenring (3) einteilig aufgebaut ist und einen am Gehäusebauteil (8) anliegenden Laufbahnabschnitt (7), einen radial innere sowie radial äußere Federstäbe (12,14) umfassenden Federabschnitt (9) und einen am Gehäusebauteil (8) verschraubten Flansch (10) aufweist, wobei die radial inneren Federstäbe (12) mit den radial äußeren Federstäben (14) über einen einzigen Verbindungsring (13) miteinander verbunden sind.

## Beschreibung

### Gebiet der Erfindung

Die Erfindung betrifft ein Wälzlager, welches insbesondere zum Einsatz in einer Gasturbine, beispielsweise einem Strahltriebwerk eines Flugzeugs, geeignet ist und einen elastisch an ein Gehäuseteil angebundenen Außenring umfasst.

### Hintergrund der Erfindung

Ein Wälzlager der eingangs genannten Art ist beispielsweise aus der US 7,384,199 B2 bekannt.

Ein Wälzlager mit einem Dämpfungssystem, welches ebenfalls für die Verwendung in einer Gasturbine geeignet ist, ist aus der DE 10 2009 056 662 A1 bekannt. Das Dämpfungssystem weist einen mit einem Dämpfungsmedium befüllten Dämpfungshohlraum auf.

### Aufgabe der Erfindung

Der Erfindung liegt die Aufgabe zugrunde, ein Wälzlager gegenüber dem genannten Stand der Technik insbesondere hinsichtlich der Feder- und Dämpfungseigenschaften weiterzuentwickeln.

### Zusammenfassung der Erfindung

Diese Aufgabe wird erfindungsgemäß gelöst durch ein Wälzlager mit den Merkmalen des Anspruchs 1. Dieses insbesondere für eine Gasturbine geeignete Wälzlager umfasst
- eine Anzahl zwischen einem Innenring und einem Außenring angeordneter Wälzkörper,
- ein Gehäusebauteil, an welchem der Außenring federnd befestigt ist, wobei der Außenring einteilig aufgebaut ist und einen am Gehäusebauteil anliegenden Laufbahnabschnitt, einen radial innere sowie radial äußere Federstäbe umfassenden Federabschnitt und einen am Gehäusebauteil verschraubten Flansch aufweist, wobei die radial inneren Federstäbe mit den radial äußeren Federstäben über einen einzigen Verbindungsring miteinander verbunden sind.

Weiterbildungen des erfindungsgemäßen Wälzlagers sind Gegenstand der abhängigen Ansprüche. Der im Anspruch 1 genannte Begriff "Innenring" ist funktional zu verstehen und schließt jegliches radial innerhalb des Außenrings angeordnetes, rotierbares Bauteil ein, auf welchem die Wälzkörper abrollen. Das Wälzlager ist in jedem Fall als Radiallager ausgebildet.

Die Erfindung geht von der Überlegung aus, dass bei der Wälzlagerung von schnell laufenden Turbinenwellen eine elastische Aufhängung des Wälzlager-Außenrings im Gehäuse in Verbindung mit einem Quetschöldämpfer zwischen Außenring und Gehäuse sinnvoll ist, um in kritischen Resonanzbereichen der Turbinenwelle entstehende Schwingungen zu dämpfen und deren Einleitung in das Gehäuse abzumildern.

Gegenüber dem Stand der Technik zeichnet sich die Erfindung dadurch aus, dass zwischen einer Anzahl radial innerer Federstäbe und einer Anzahl radial äußerer Federstäbe ein einziges, nicht federndes Element, nämlich ein Verbindungsring, geschaltet ist, welcher insbesondere eine flexible, anforderungsgerechte Auslegung der Elastizität des Außenrings in radialer Richtung ermöglicht.

Vorzugsweise hat der Federabschnitt, welcher im Querschnitt eine aus einem inneren und einem äußeren Federstab sowie einem Abschnitt des Verbindungsrings gebildete U-Form aufweist, nicht lineare Federeigenschaften, wobei bevorzugt eine progressive Federkennlinie gegeben ist.

Die Progressivität der Federkennlinie des gesamten Federabschnitts kann dadurch erreicht oder unterstützt werden, dass bei der Einfederung des Außenrings der Verbindungsring nach kurzem Federweg an ein Gehäuseteil anschlägt und somit ab diesem Punkt nur noch einer der Federstäbe eine weitere Einfederung ermöglicht.

In bevorzugter Ausgestaltung weisen die radial inneren Federstäbe andere Federeigenschaften als die radial äußeren Federstäben auf. Hierbei sind die radial äußeren Federstäbe vorzugsweise weicher als die radial inneren Federstäbe.

### Beschreibung der Zeichnungen

Nachfolgend wird ein Ausführungsbeispiel der Erfindung anhand einer Zeichnung näher erläutert. Hierin zeigen:
- Fig. 1: ein Wälzlager einer Gasturbine im Querschnitt.
- Fig. 2 und 3: das Wälzlager nach Fig. 1 in weiteren Ansichten.

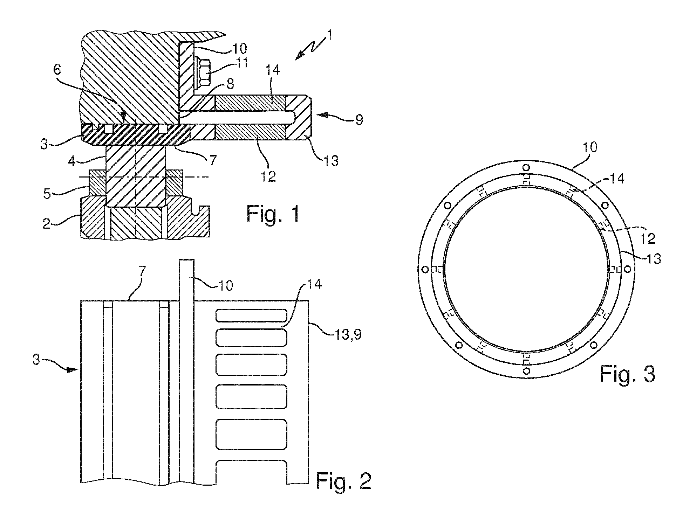

Das in den Figuren 1 bis 3 dargestellte, insgesamt mit dem Bezugszeichen 1 gekennzeichnete Wälzlager ist als Zylinderrollenlager ausgebildet und zum Einbau in eine Gasturbine zur Lagerung der Turbinenwelle vorgesehen. Hinsichtlich der prinzipiellen Funktion des Wälzlagers 1 wird auf den eingangs zitierten Stand der Technik verwiesen. Das Wälzlager 1 umfasst zwischen einem Innenring 2 und einem Außenring 3 angeordnete Wälzkörper 4, nämlich Zylinderrollen. Statt auf dem Innenring 2 könnten die Wälzkörper 4 auch direkt auf einer Welle abrollen. Die einzelnen Wälzkörper 4 sind durch einen Käfig 5 voneinander beabstandet.

Der Außenring 3 liegt unter Zwischenschaltung eines Quetschöldämpfers 6 mit einem Laufbahnabschnitt 7 an einem Gehäusebauteil 8 an. Der Laufbahnabschnitt 7 des Außenrings 7 geht einstückig in einen im Querschnitt nach Fig. 1 U-förmigen Federabschnitt 9 über, welcher wiederum einstückig in einen Flansch 10 übergeht, der am Gehäusebauteil 8 mit Schrauben 11 festgeschraubt ist.

Der Federabschnitt 9 setzt sich zusammen aus einer Vielzahl radial innen liegender Federstäbe 12, einem einzigen Verbindungsring 13, sowie einer Vielzahl radial außen liegender Federstäbe 14. Hierbei stimmt im Ausführungsbeispiel die Anzahl der radial innen liegenden Federstäbe 12 mit der Anzahl der radial außen liegenden Federstäbe 14 überein. Ebenso sind jedoch Ausführungsformen realisierbar, bei denen die Anzahl der radial innen liegenden Federstäbe 12 von der Anzahl der radial außen liegenden Federstäbe 14 abweicht. In jedem Fall sind die radial innen liegenden Federstäbe 12 auf derselben Seite des Verbindungsrings 13 angeordnet wie die radial außen liegenden Federstäbe 14, so dass im Querschnitt nach Fig. 1 die Federstäbe 12,14 jeweils einen U-Schenkel und der Verbindungsring 13 eine diese U-Schenkel verbindende U-Basis darstellt. Jeder der Federstäbe 12,14 ist parallel zur Rotationsachse des Wälzlagers 1 angeordnet, wobei die radial innen liegenden Federstäbe 12 in gerader, axialer Verlängerung des Laufbahnabschnitts 7 angeordnet sind.

In der vereinfachten Querschnittsdarstellung nach Fig. 1 erscheinen beide Typen von Federstäben 12,14 gleichartig, wobei der außen liegende Federstab 14 exakt radial außerhalb des innen liegenden Federstabs 12 angeordnet ist. Durch unterschiedliche geometrische Gestaltung der Federstäbe 12,14 ist optional eine Federkennlinie des gesamten Federabschnitts 9 gegeben, welche nicht linear, sondern progressiv ist. Hierbei hat der radial außen liegende Federstab 14 eine geringere Federhärte als der radial innen liegende Federstab 12, während der Verbindungsrings 13 keine federnden Eigenschaften aufweist.

Federt der radial außen liegende Federstab 14 ein, was mit einer Verengung des durch den Quetschöldämpfer 6 gebildeten Spaltes zwischen dem Laufbahnabschnitt 7 des Außenrings 3 und dem Gehäusebauteil 8 gleichbedeutend ist, so verlagert sich der Verbindungsring 13 zumindest geringfügig in radialer Richtung. Diese Verlagerung kann begrenzt sein durch einen nicht dargestellten, relativ zum Gehäusebauteil 8 festen Anschlag, an welchen der Verbindungsring 13 oder ein anderes Teil des Außenrings 3 anschlägt, wobei an dieser Stelle ein Dämpfungsmittel, insbesondere in Form eines zusätzlichen Quetschöldämpfers, vorgesehen sein kann. Ebenso kann ein Anschlag in umgekehrter radialer Richtung vorhanden sein, welcher ein zu weites Abheben des Laufbahnabschnitts 7 vom Gehäusebauteil 8 verhindert. Geringfügige Bewegungen des Laufbahnabschnitts 7 sind auch in axialer Richtung des Wälzlagers 1 möglich. Sowohl hinsichtlich radialer als auch axialer Schwingungen des Außenrings 3 ist die geschlossene Form und damit Steifigkeit sowie relativ hohe Masse des Verbindungsrings 13 schwingungstechnisch von Vorteil.

### Bezugszeichenliste

| | |
|---|---|
| 1 | Wälzlager |
| 2 | Innenring |
| 3 | Außenring |
| 4 | Wälzkörper |
| 5 | Käfig |
| 6 | Quetschöldämpfer |
| 7 | Laufbahnabschnitt |
| 8 | Gehäusebauteil |
| 9 | Federabschnitt |
| 10 | Flansch |
| 11 | Schraube |
| 12 | radial innen liegender Federstab |
| 13 | Verbindungsring |
| 14 | radial außen liegender Federstab |

## Patentansprüche

1. Wälzlager, insbesondere einer Gasturbine, mit
- einer Anzahl zwischen einem Innenring (2) und einem Außenring (3) angeordneten Wälzkörpern (4),
- einem Gehäusebauteil (8), an welchem der Außenring (3) federnd befestigt ist, wobei der Außenring (3) einteilig aufgebaut ist und einen am Gehäusebauteil (8) anliegenden Laufbahnabschnitt (7), einen radial innere sowie radial äußere Federstäbe (12,14) umfassenden Federabschnitt (9) und einen am Gehäusebauteil (8) verschraubten Flansch (10) aufweist,
**dadurch gekennzeichnet, dass**
- die radial inneren Federstäbe (12) mit den radial äußeren Federstäben (14) über einen einzigen Verbindungsring (13) miteinander verbunden sind.

2. Wälzlager nach Anspruch 1, **dadurch gekennzeichnet, dass** der Federabschnitt (9) nicht lineare Federeigenschaften aufweist.

3. Wälzlager nach Anspruch 2, **dadurch gekennzeichnet, dass** der Federabschnitt (9) eine progressive Federkennlinie aufweist.

4. Wälzlager nach Anspruch 3, **dadurch gekennzeichnet, dass** die radial inneren Federstäbe (12) andere Federeigenschaften als die radial äußeren Federstäbe (14) aufweisen.

5. Wälzlager nach Anspruch 4, **dadurch gekennzeichnet, dass** die radial äußeren Federstäbe (14) weicher als die radial inneren Federstäbe (12) sind.

6. Wälzlager nach einem der Ansprüche 1 bis 5, **dadurch gekennzeichnet, dass** die Wälzkörper (4) als Zylinderrollen ausgebildet sind.
